(19) Europäisches Patentamt
European Patent Office
Office européen des brevets

(11) **EP 4 614 800 A1**

(12) **EUROPEAN PATENT APPLICATION**

(43) Date of publication:
**10.09.2025 Bulletin 2025/37**

(21) Application number: **24161160.7**

(22) Date of filing: **04.03.2024**

(51) International Patent Classification (IPC):
***H02P 23/14*** *(2006.01)*

(52) Cooperative Patent Classification (CPC):
**H02P 23/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG
5400 Baden (CH)**

(72) Inventors:
• **Kavala, Asko**
 **53300 Lappeenranta (FI)**
• **Pekkala, Asko**
 **00380 Helsinki (FI)**
• **Alkkiomäki, Olli**
 **00380 Helsinki (FI)**

(74) Representative: **Kolster Oy Ab
Salmisaarenaukio 1
P.O. Box 204
00181 Helsinki (FI)**

(54) **DETERMINING REFERENCE POWER VALUE FOR ESTIMATING SAVED ENERGY**

(57) Disclosed is a method comprising collecting operational data associated with a motor controlled by a variable speed drive, wherein the operational data comprises at least speed values and power values of the motor; determining, based on the operational data, a reference power value corresponding to a nominal speed value of the motor; and estimating, based on the reference power value, an amount of energy saved by the variable speed drive compared to direct on line motor control.

| 401 | Collect operational data associated with motor |
|---|---|
| 402 | Determine reference power value |
| 403 | Estimate amount of energy saved |

FIG. 4

**Description**

TECHNICAL FIELD

The following example embodiments relate to variable speed drives.

BACKGROUND

Currently, there is a heightened awareness regarding energy consumption and its impact on the environment, particularly concerning carbon dioxide emissions. Modern electronic devices are increasingly equipped with capabilities to monitor and calculate their own energy consumption as an embedded functionality. This monitored data can be utilized to enhance the efficiency of a system or production process.

BRIEF DESCRIPTION

The scope of protection sought for various example embodiments is set out by the claims. The example embodiments and features, if any, described in this specification that do not fall under the scope of the claims are to be interpreted as examples useful for understanding various embodiments.

LIST OF DRAWINGS

In the following, various example embodiments will be described in greater detail with reference to the accompanying drawings, in which

> FIG. 1 illustrates an example of a communication system;
> FIG. 2 illustrates a signal flow diagram;
> FIG. 3 illustrates a flow chart;
> FIG. 4 illustrates a flow chart;
> FIG. 5A illustrates an example of operational data;
> FIG. 5B illustrates an example of generating a curve;
> FIG. 5C illustrates an example of identifying a reference power value;
> FIG. 6 illustrates an example of the error between a nominal power value and the reference power value; and
> FIG. 7 illustrates an example of an apparatus.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Currently, there is a heightened awareness regarding energy consumption and its impact on the environment, particularly concerning carbon dioxide emissions. Modern electronic devices are increasingly equipped with capabilities to monitor and calculate their own energy consumption as an embedded functionality. This monitored data can be utilized to enhance the efficiency of a system or production process, or to evaluate the merits of recently undertaken investments.

For example, in pump applications, the use of a variable speed drive (VSD) may be a significant energy saver when compared to conventional systems, which comprise throttling control paired with a direct on line (DOL) starter, especially in scenarios involving quadratic torque loads. In DOL motor control, the DOL motor starter connects the electric motor directly to the line voltage. DOL starters operate as a basic stop/start switch for an electric motor and may be fitted with overload protection devices to prevent short circuits and overheating.

The primary difference between DOL motor control and VSDs is that DOL starters provide full voltage for direct motor start-up, resulting in high inrush current and fixed-speed operation, whereas VSDs gradually vary the motor's speed and torque by adjusting the power supply's frequency and voltage, offering greater control and efficiency.

For calculating the energy savings provided by variable speed drive applications, a reference motor power value under DOL control is needed. This reference motor power value represents the power that is needed to run the process or actuator in accordance with the torque requirement. In a fan or pump application with VSD control, the reference (nominal) speed of the motor typically results in a reduced power requirement to maintain the torque, as compared to DOL control. The difference in the required power between DOL and VSD control may be used as a basis for calculating the energy savings provided by VSD. Conventionally, the reference power value for DOL has been assumed to remain constant across the motor's speed range (from zero to its maximum speed).

The challenge herein lies in accurately defining the reference power value for the purpose of calculating the energy savings. While the nominal (nameplate) motor power may serve as a potential reference, variations in motor and actuator sizing may lead to significant deviations from this nominal (nameplate) value. For example, using the nominal power value of an oversized motor as a reference in the energy-saving calculations may result in overestimated energy savings. Typically, the range of motor operation points under VSD control, in terms of speed, is below the asynchronous motor's nominal speed. Therefore, specialized setups and measurements may be needed to determine the correct reference power value.

The definition of the reference power value can be set during the initial commissioning of the variable speed drive. However, usually there is very little operational data available at this stage. In practice, the motor's nominal (nameplate) power value is often employed as the reference for the energy savings calculation. Because of this uncertainty regarding the reference power value, the energy saving monitoring features of VSDs are seldom used.

The advent of cloud technology provides the capability to monitor variable speed drives and associated applications remotely. Given the increasing importance of energy consumption and savings, improved accuracy in calculating the energy savings is essential to sustainability.

Some example embodiments provide a method for determining a reference power value in order to accurately estimate the amount of energy saved by a variable speed drive in comparison to DOL motor control. In some example embodiments, this reference power value may be determined based on remotely collected operational data of the variable speed drive. Thus, there is no need to perform any additional measurement actions on-site. Accurate estimation of the energy savings may be beneficial for optimizing energy efficiency and reducing environmental impact.

Different embodiments and examples are described below using single units, models, equipment and memory, without restricting the embodiments and examples to such a solution. Concepts called cloud computing and/or virtualization may be used. Virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN) may cause one or more of the functionalities described below to be migrated to any corresponding abstraction or apparatus or device. Therefore, all words and expressions should be interpreted broadly, and they are intended to illustrate, not to restrict, the example embodiments.

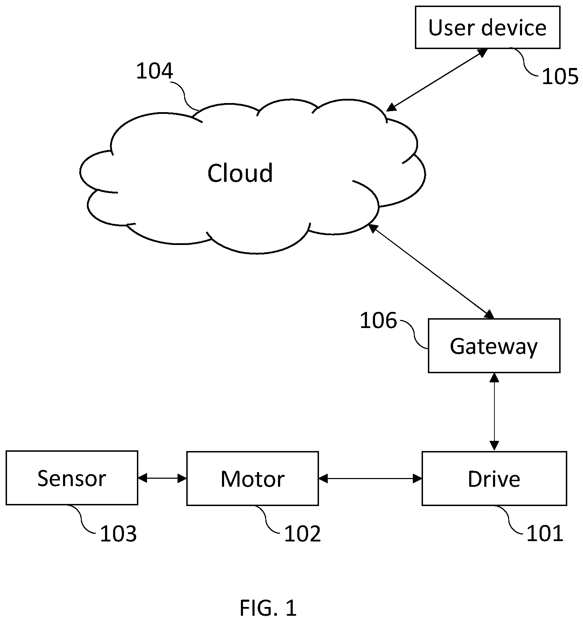

FIG. 1 illustrates an example of a communication system to which some example embodiments may be applied. Referring to FIG. 1, some example embodiments may be based on wireless or wired communications, such as 3G (third generation), 4G (fourth generation), LTE (long term evolution), LTE-A (long term evolution advanced), 5G (fifth generation), 5G NR (new radio), 6G (sixth generation), UMTS (universal mobile telecommunications system), EDGE (enhanced data rates for GSM evolution), WCDMA (wideband code division multiple access), Bluetooth, WLAN (wireless local area network), Wi-Fi, Li-Fi (light fidelity), Ethernet, or any other mobile or wireless or wired network. The communication may also occur between nodes belonging to different but compatible systems, such as LTE and 5G.

It should be noted that FIG. 1 illustrates a simplified system architecture only showing some elements and functional entities, all being logical units whose implementation may differ from what is shown. The connections shown in FIG. 1 are logical connections; the actual physical connections may be different. Data collection may use so-called master protocols, in which a master network node subscribes data from slaves (devices whose data it wants to have), and a slave device or network node sends its data to the receiver/master based on query or automatically based on subscription. It is apparent to a person skilled in the art that the system may also comprise other functions and structures. It should be appreciated that the functions, structures, elements, and protocols used in or for communication are irrelevant to the example embodiments. Therefore, they need not be discussed in more detail here.

Referring to FIG. 1, the system may comprise at least one variable speed drive 101, at least one motor 102, one or more sensor devices 103, a gateway device 106, a cloud platform 104, and a user device 105.

The variable speed drive 101 may also be referred to as a variable frequency drive. The variable speed drive 101 may be used to run or rotate an electric motor 102 at different speeds, wherein the electric motor 102 may run a pump or any other rotating equipment (e.g., fan, gearbox, belt drive, etc.). The variable speed drive 101 may be electrically connected to the electric motor 102. The variable speed drive 101 may comprise or be connected to a controller, for example a proportional-integral-derivative (PID) controller. The controller may be configured to send control signals to the variable speed drive 101. The variable speed drive 101 may control highly dynamic industrial processes, in which for example the speed or torque applied to the motor 102 has to be varied according to the needs of the industrial process.

The variable speed drive 101 may be equipped with a short-range communication interface, such as Bluetooth, Ethernet, ZigBee, Li-Fi, Wi-Fi, wireless mesh network, near field communication (NFC), or any other wireless or wired connection. The short-range communication interface may be comprised, for example, in the variable speed drive 101 or in a control panel of the variable speed drive 101. The variable speed drive 101 may be configured to communicate with the gateway device 106, the motor 102 and/or the one or more sensor devices 103 via the short-range communication interface.

The one or more sensor devices 103 may be configured to measure operational data associated with the motor 102. The operational data may comprise values of one or more variables associated with the motor 102. For example, the one or more sensor devices 103 may measure values of at least one of: speed, torque, vibration, temperature, magnetic flux density, and/or electrical current of the motor 102 over time. There may be separate sensor devices for measuring each variable (e.g., separate sensors for vibration and temperature, respectively), or the variables may be measured by the same sensor device. The one or more sensor devices 103 may be comprised in the motor 102, or attached to the motor 102, or in close proximity to the motor 102.

The variable speed drive 101 may be configured to estimate or calculate the speed and power output of the motor 102. For example, the variable speed drive 101 may use one or more algorithms to estimate the motor's speed based on electrical parameters such as voltage, current, and the motor's electrical characteristics. In this way, the variable speed drive 101 may control the speed of the motor 102 without the need for a physical speed sensor. The power output of the motor 102 may be calculated by the variable speed drive 101 based on the voltage and current supplied to the motor 102, and the motor's efficiency and power factor.

The variable speed drive 101 may be configured to communicate with the cloud platform 104 via the gateway device 106. For example, the variable speed drive 101 may transmit the operational data to the cloud platform 104 via the gateway device 106. The gateway device 106 may comprise, for example, an edge gateway or a user device (which may be the same as the user device 105, or different from the user device 105). For example, a mobile phone (or any other user device) may be used as the gateway device 106 to to push the operational data to the cloud platform 104 via an internet connection. The user device used as the gateway device 106 may also be used to view historical measurement information from the one or more sensor devices 103 (stored at the cloud platform 104) via the internet connection.

For enabling the connection between the variable speed drive 101 and the gateway device 106, the gateway device 106 may also be equipped with a short-range communication interface, such as Bluetooth, Ethernet, ZigBee, Li-Fi, Wi-Fi, wireless mesh network, NFC, or any other wireless or wired connection.

The gateway device 106 may be connected to the internet via a network interface, such as 3G, 4G, LTE, LTE-A, 5G, 5G NR, 6G, UMTS, EDGE, WCDMA, WLAN, Wi-Fi, Li-Fi, Ethernet, or any other mobile, wireless or wired network. The gateway device 106 may be connected to the cloud platform 104 via the network interface.

The cloud platform 104, also known as a cloud computing platform, refers to a comprehensive and integrated set of cloud-based services and resources that enable users to build, deploy, manage, and scale various applications and services over the internet. It provides a flexible and scalable infrastructure for hosting applications, storing data, and executing computing tasks without the need for on-premises hardware and infrastructure.

The cloud platform 104 may be configured to collect or receive the operational data from the variable speed drive 101 via the gateway device 106. The cloud platform 104 may further be configured to store the received operational data in at least one memory or database.

The cloud platform 104 or the variable speed drive 101 may be configured to determine, based on the operational data, a reference power value corresponding to a nominal speed value of the motor 102; and estimate, based on the reference power value, an amount of energy saved by the variable speed drive 101 compared to direct on line motor control.

The cloud platform 104 may further be connected to a user device 105 to enable a user of the user device 105 to monitor the condition of the motor 102 via a user interface based on the operational data. The cloud platform 104 may be configured to indicate, to the user device 105, the amount of energy saved.

The user device 105 may comprise user equipment such as a smartphone, mobile phone, tablet computer, laptop computer, desktop computer, or any other computing device. The user device 105 may be a remote device located at a different site than the motor 102. Alternatively, the user device 105 may be a local device located on-site at a close proximity to the motor 102.

The user device 105 may be connected to the internet via a network interface, such as 3G, 4G, LTE, LTE-A, 5G, 5G NR, 6G, UMTS, EDGE, WCDMA, WLAN, Wi-Fi, Li-Fi, Ethernet, or any other mobile, wireless or wired network. The user device 105 may be configured to exchange information, i.e., to transmit and/or receive data, with the cloud platform 104 via the network interface.

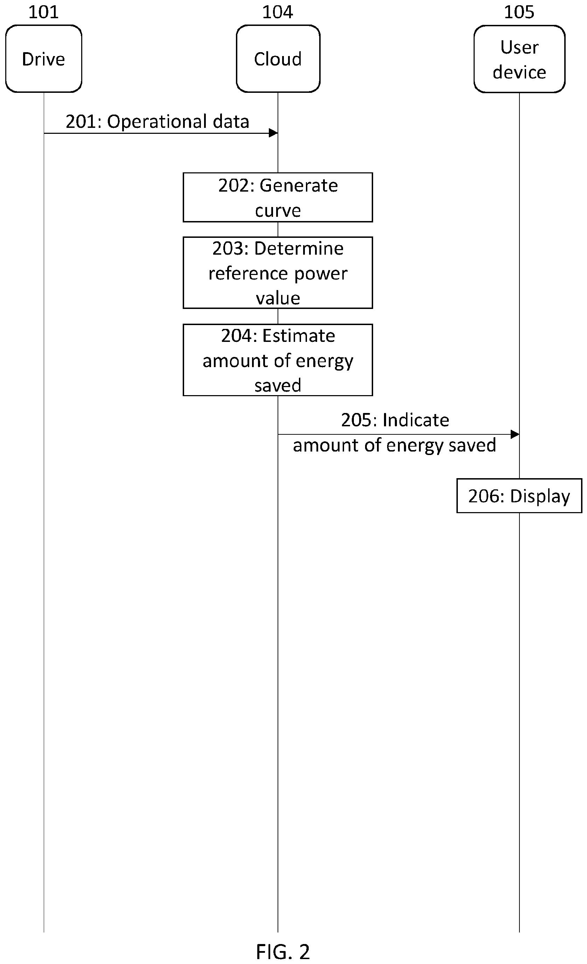

FIG. 2 illustrates a signal flow diagram according to an example embodiment.

Referring to FIG. 2, at 201, the cloud platform 104 collects or receives, from the variable speed drive 101, operational data associated with the motor 102 controlled by the variable speed drive 101, wherein the operational data comprises at least speed values and power values of the motor 102. The speed values (speed output) and power values (power output) of the motor 102 may be measured during the operation of the motor 102 and transmitted to the cloud platform 104 in real time or at certain time intervals.

The operational data may be collected over a pre-determined time period, wherein the length of this pre-determined time period depends on the process variations of the target application. For example, the motor 102 may be part of a pump application or a fan application. The pre-determined time period may be, for example, at least a day, a week, or another suitable duration.

In pump or fan applications, the operational speed of the motor 102 typically remains below the field weakening point of the motor 102 (i.e., a point where the motor's magnetic field becomes saturated, leading to a decrease in torque). The controlled speed values may be within a relatively narrow range due to the efficiency characteristics of the actuator (i.e., the device that converts the motor's rotational motion into useful mechanical work).

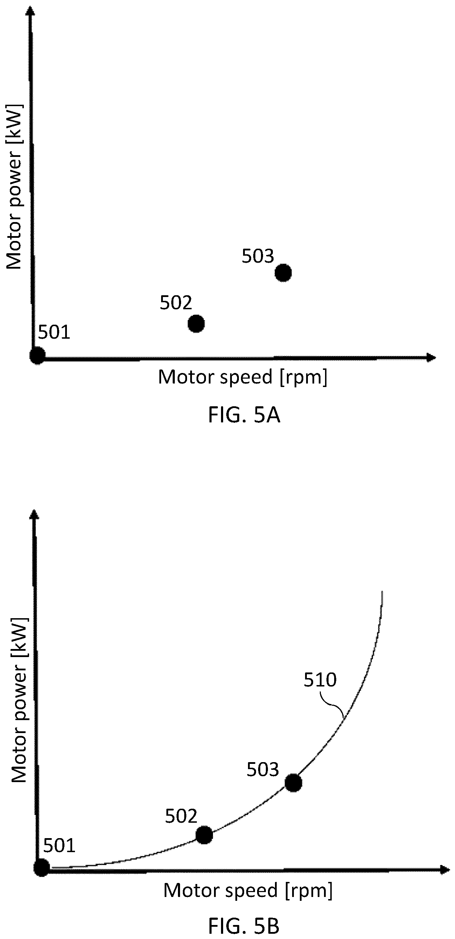

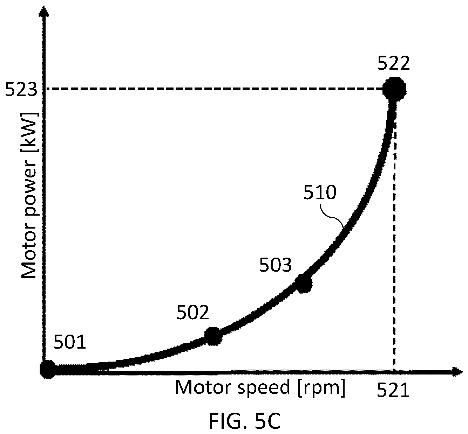

At 202, the cloud platform 104 generates, based on the operational data, a curve representing a relationship between the speed values and the power values of the motor 102, starting from zero speed. In other words, the curve indicates how the motor 102 performs at different speeds. An example of the curve 510 is shown in FIG. 5B and FIG. 5C.

The curve may be represented by a third-degree polynomial function $P_{VSD(n)} \approx an^3 + bn^2 + cn + d$, where $a, b, c,$ and d are adjusting constants. The curve may be fitted to the collected operational data by using any suitable computational software.

In this way, a model may be created for defining a reference power value for estimating the amount of energy saved by the variable speed drive 101.

At 203, the cloud platform 104 determines or identifies the reference power value according to a point on the curve corresponding to a nominal speed value of the motor 102. An example of identifying the reference power value 523 on the curve 510 based on the nominal speed value 521 is shown in FIG. 5C. The nominal speed value of the motor 102 is information that is available at the variable speed drive 101, and the cloud platform 104 may obtain this information from the variable speed drive 101 (e.g., by reading the nominal speed value from the parameter setup of the variable speed drive 101).

In other words, at the motor's nominal speed (i.e., the speed at which it is designed to operate most efficiently, often indicated on its nameplate), a specific operation point is defined. This operation point represents the motor's power output under direct on line motor control. This operation point serves as the reference power value for calculating the energy savings of the variable speed drive 101 compared to direct on line motor control.

At 204, the cloud platform 104 estimates, based on the reference power value, an amount of energy saved by the variable speed drive 101 compared to direct on line motor control. In other words, the reference power value may be used as a reference for estimating the amount of energy saved.

The energy consumption of the motor 102 under DOL motor control can be estimated, for example, using the formula: $E_{DOL} = P_{ret} * T$, where $E_{DOL}$ is the amount of energy consumed by the motor 102 under DOL control (e.g., in kilowatt-hours), $P_{ref}$ is the reference power value (e.g., in kilowatts), and $T$ is the operating time of the motor 102 (e.g., in hours or days).

The variable speed drive 101 adjusts the speed and load of the motor 102, which results in different energy consumption patterns. The energy consumed by the motor 102 under VSD control can be approximated using the Affinity Laws, which suggest that power varies with the cube of the speed for centrifugal loads. For example, the energy consumed by the motor 102 under VSD control may be estimated using the formula:

$$E_{VSD} = P_{ref} * T * LF * \left(\frac{N_{VSD}}{N_{rated}}\right)^3$$

, where $E_{VSD}$ is the amount of energy consumed by the motor 102 under VSD control (e.g., in kilowatt-hours), $P_{ref}$ is the reference power value (e.g., in kilowatts), $T$ is the operating time of the motor 102 (e.g., in hours or days), $LF$ is the load factor (i.e., the ratio of actual load to rated load), $N_{VSD}$ is the average speed of the motor 102 with VSD, and $N_{rated}$ is the rated speed of the motor 102. The $P_{ref}$ value refers to the motor power when connected directly to the supply. The $P_{ref}$ value may be used for reference when energy savings are calculated. The accuracy of the energy savings calculation is directly dependent on the accuracy of the $P_{ref}$ value.

The amount of energy saved may then be calculated as the difference in the energy consumption of the motor 102 in DOL and VSD operation: *Energy Savings* = $E_{DOL}$ - $E_{VSD}$

The calculation of the amount of energy saved may have various purposes. For example, the calculation of the amount of energy saved may be used to prove the energy saving effect of the selected target application (e.g., compared to similar assets and/or fleets), or to enable an energy consumption review of the selected target application (e.g., in terms of energy usage, actual load factor, or oversizing or undersizing of the motor 102 or the actuator). As another example, the calculation of the amount of energy saved may be used to detect from the application that an advanced energy optimization function may increase the efficiency of the powertrain. Moreover, trusting in the result of energy saving calculation may enable more energy-improving concepts.

At 205, the cloud platform 104 may indicate, to the user device 105, the amount of energy saved.

At 206, the user device 105 may display the amount of energy saved to a user, for example via a graphical user interface.

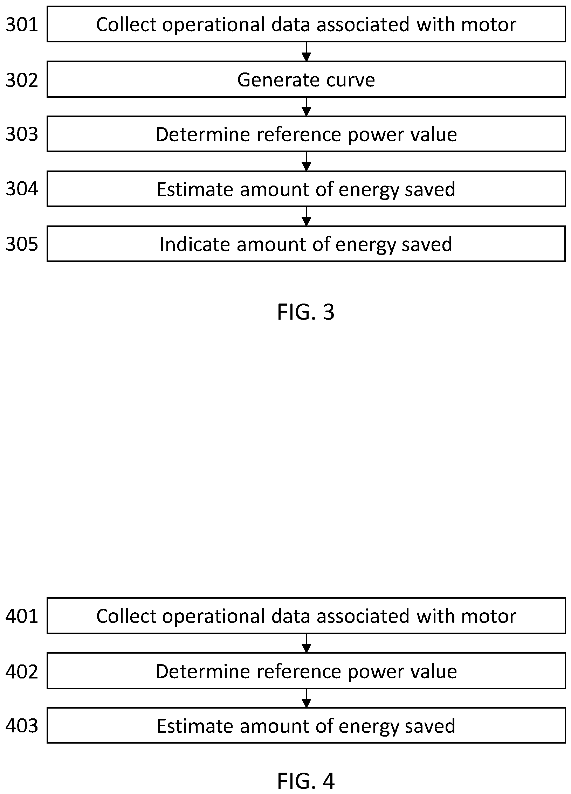

In an alternative embodiment, the amount of energy saved may be estimated as an embedded functionality of the variable speed drive 101 (instead of the cloud 104). This is described in the following with reference to FIG. 3.

FIG. 3 illustrates a flow chart according to an example embodiment of a method performed by a variable speed drive 101.

Referring to FIG. 3, in block 301, the variable speed drive 101 collects operational data associated with a motor 102 controlled by the variable speed drive 101, wherein the operational data comprises at least speed values and power values of the motor 102.

The operational data may be collected over a pre-determined time period sufficient to represent process variations in a target application. For example, the motor 102 may be part of a pump application or a fan application.

In block 302, the variable speed drive 101 generates, based on the operational data, a curve representing a relationship between the speed values and the power values of the motor 102.

The curve may be represented by a third-degree polynomial function $P_{VSD(n)} \approx an^3 + bn^2 + cn + d$, where $a$, $b$, $c$, and d are adjusting constants. The curve may be fitted to the collected operational data by using any suitable computational software.

In block 303, the variable speed drive 101 determines or identifies a reference power value according to a point on the curve corresponding to a nominal speed value of the motor 102.

In block 304, the variable speed drive 101 estimates, based on the reference power value, an amount of energy saved by the variable speed drive 101 compared to direct on line motor control. In other words, the reference power value may be used as a reference for estimating the amount of energy saved.

In block 305, the variable speed drive 101 indicates, to a user, the amount of energy saved (e.g., via a user interface).

The variable speed drive 101 may determine one or more control parameter changes (e.g., optimizing flux control) for the variable speed drive 101 based on the amount of energy saved, and propose the one or more control parameter changes to the user (e.g., via the user interface).

FIG. 4 illustrates a flow chart according to an example embodiment of a method performed by one or more cloud services of the cloud platform 104, or an apparatus 700 comprising, or comprised in, the cloud platform 104, or the variable speed drive 101 or any other computing device.

Referring to FIG. 4, in block 401, the apparatus 700 collects operational data associated with a motor 102 controlled by the variable speed drive 101, wherein the operational data comprises at least speed values and power values of the motor 102. The motor 102 may be an electric motor.

The operational data may be collected over a pre-determined time period sufficient to represent process variations in a target application. For example, the motor 102 may be part of a pump application or a fan application.

In block 402, the apparatus 700 determines, based on the operational data, a reference power value corresponding to a nominal speed value of the motor 102.

In block 403, the apparatus 700 estimates, based on the reference power value, an amount of energy saved by the variable speed drive 101 compared to direct on line motor control. In other words, the reference power value may be used as a reference for estimating the amount of energy saved.

The apparatus 700 may generate, based on the operational data, a curve representing a relationship between the speed values and the power values of the motor 102. The curve may be represented by a third-degree polynomial function.

The reference power value may be identified according to a point on the curve corresponding to the nominal speed value of the motor 102.

The apparatus 700 may indicate, to a user, the amount of energy saved.

The functions and/or blocks described above by means of FIG. 2, FIG. 3 and FIG. 4 are in no absolute chronological order, and some of them may be performed simultaneously or in an order differing from the described one. Other functions and/or blocks may also be executed between them or within them. Some of the functions and/or blocks can also be left out or replaced by a corresponding function or block.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 5A illustrates an example of the operational data. In FIG. 5A, three motor speed and power points 501, 502, 503 of the selected application are illustrated in a scatter plot, where the vertical axis represents the motor power (in kilowatts), and the horizontal axis represents the motor speed (in rotations per minute). In other words, each point 501, 502, 503 represents a pair of power and speed values. In practice, this is a set of measurement points from a monitored time period.

FIG. 5B illustrates an example of generating the curve 510. In FIG. 5B, the curve 510 is fitted to follow the operation points 501, 502, 503. It is not necessary to have operation points at the maximum power of the motor 102. The loading function representing the curve can be formed automatically using suitable computational software.

FIG. 5C illustrates an example of identifying the reference power value 523 according to a point 522 on the curve 510 corresponding to the nominal speed value 521 of the motor 102. In FIG. 5C, a vertical line at the nominal speed 521 of the motor 102 has been drawn. This line crosses the curve 510 at the point 522, which represents the needed power for the DOL motor control. Respectively, this reference power value 523 can be calculated automatically.

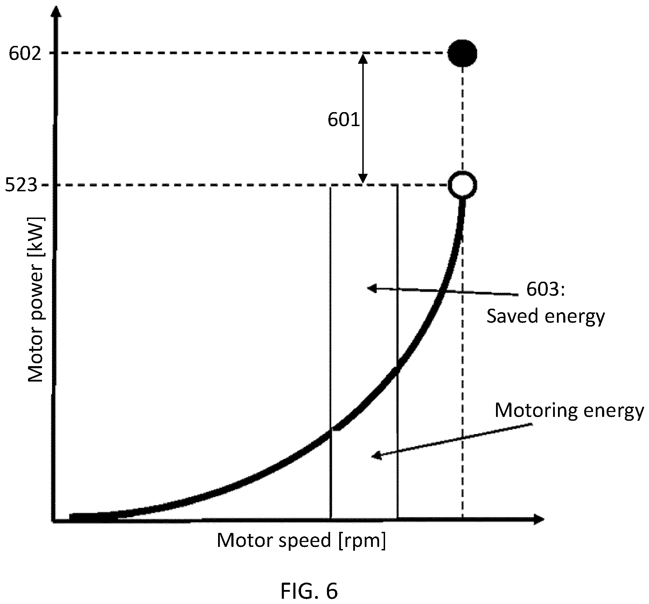

FIG. 6 illustrates an example of the error 601 between the nominal (nameplate) power value 602 of the motor 102 and the reference power value 523 defined according to the actual application. In FIG. 6, the area 603 visualizes the amount of energy saved, as estimated based on the reference power value 523. Using the nominal power value 602 would result in overestimated energy savings. Thus, by using the reference power value 523 for estimating the energy savings, the error in the energy savings estimation may be reduced in comparison to using the nominal power value 602 for estimating the energy savings.

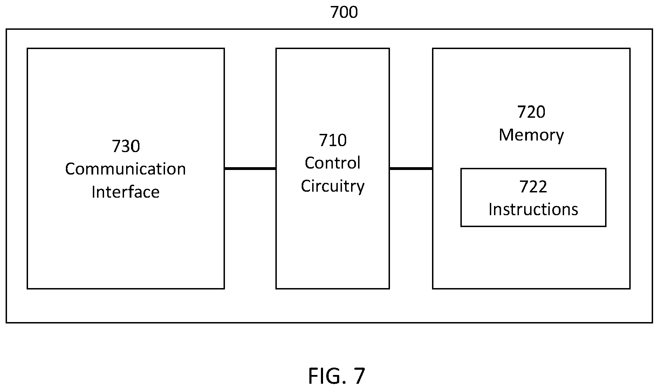

FIG. 7 illustrates an example of an apparatus 700 comprising means for performing one or more of the example embodiments described above. The apparatus 700 may comprise, or be comprised in, the cloud platform 104 or a server of the cloud platform 104. For example, the means may comprise one or more cloud services of the cloud platform 104, or the means may comprise virtualization infrastructure. Cloud services refer to a wide range of on-demand computing resources and applications that may be provided to users over the internet by the cloud platform 104. Alternatively, the apparatus 700 may comprise, or be comprised in, the variable speed drive 101 or any other computing device.

The apparatus 700 may comprise, for example, a circuitry or a chipset applicable for realizing one or more of the example embodiments described above. The apparatus 700 may be an electronic device or computing system comprising one or more electronic circuitries. The apparatus 700 may comprise a control circuitry 710 such as at least one processor, and at least one memory 720 storing instructions 722 which, when executed by the at least one processor, cause the apparatus 700 to carry out one or more of the example embodiments described above. Such instructions 722 may, for example, include computer program code (software). The at least one processor and the at least one memory storing the instructions may provide the means for providing or causing the performance of any of the methods and/or blocks described above.

The processor is coupled to the memory 720. The processor is configured to read and write data to and from the memory 720. The memory 720 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 720 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 720 or, alternatively or additionally, they may be received, by the apparatus, via an electromagnetic carrier signal and/or may be copied from a physical entity such as a computer program product. Execution of the computer readable instructions causes the apparatus 700 to perform one or more of the functionalities described above.

The memory 720 may be implemented using any suitable data storage technology, such as semiconductor-based memory devices, flash memory, magnetic memory devices and systems, optical memory devices and systems, fixed memory and/or removable memory.

The apparatus 700 may further comprise or be connected to a communication interface 730 comprising hardware and/or software for realizing communication connectivity according to one or more communication protocols. The communication interface 730 may comprise at least one transmitter and at least one receiver that may be integrated to the apparatus 700 or that the apparatus 700 may be connected to. The communication interface 730 may provide means for performing some of the blocks for one or more example embodiments described above. The communication interface 730 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 730 provides the apparatus with communication capabilities to communicate in the wireless communication network. The communication interface 730 may, for example, provide a network interface for communicating with the one or more sensor devices 103 and/or the gateway device 106.

It is to be noted that the apparatus 700 may further comprise various components not illustrated in FIG. 7. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s)), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

**Claims**

1. An apparatus comprising:

   means for collecting operational data associated with a motor controlled by a variable speed drive, wherein the operational data comprises at least speed values and power values of the motor;
   means for determining, based on the operational data, a reference power value corresponding to a nominal speed value of the motor; and
   means for estimating, based on the reference power value, an amount of energy saved by the variable speed drive compared to direct on line motor control.

2. The apparatus of claim 1, further comprising:

   means for generating, based on the operational data, a curve representing a relationship between the speed values and the power values of the motor,
   wherein the means for determining the reference power value are configured to identify the reference power value according to a point on the curve corresponding to the nominal speed value of the motor.

3. The apparatus of claim 2, wherein the curve is represented by a third-degree polynomial function.

4. The apparatus of any preceding claim, wherein the means for collecting the operational data are configured to collect the operational data over a predetermined time period sufficient to represent process variations in a target application.

5. The apparatus of any preceding claim, wherein the motor is part of a pump application or a fan application.

6. The apparatus of any preceding claim, wherein the means for estimating the amount of energy saved are configured to use the reference power value as a reference for estimating the amount of energy saved.

7. The apparatus of any preceding claim, further comprising:
   means for indicating, to a user, the amount of energy saved.

8. The apparatus of any preceding claim, wherein the apparatus comprises, or is comprised in, the variable speed drive.

9. The apparatus of any preceding claim, wherein the apparatus comprises, or is comprised in, a cloud platform.

10. A method comprising:

collecting operational data associated with a motor controlled by a variable speed drive, wherein the operational data comprises at least speed values and power values of the motor; determining, based on the operational data, a reference power value corresponding to a nominal speed value of the motor; and
estimating, based on the reference power value, an amount of energy saved by the variable speed drive compared to direct on line motor control.

11. The method of claim 10, further comprising:

generating, based on the operational data, a curve representing a relationship between the speed values and the power values of the motor, wherein the reference power value is determined by identifying the reference power value according to a point on the curve corresponding to the nominal speed value of the motor.

12. The method of claim 11, wherein the curve is represented by a third-degree polynomial function.

13. The method of any of claims 10 to 12, wherein the operational data is collected over a pre-determined time period sufficient to represent process variations in a target application.

14. The method of any of claims 10 to 13, further comprising:
indicating, to a user, the amount of energy saved.

15. A computer program comprising instructions which, when executed by an apparatus, cause the apparatus to perform at least the following:

collecting operational data associated with a motor controlled by a variable speed drive, wherein the operational data comprises at least speed values and power values of the motor; determining, based on the operational data, a reference power value corresponding to a nominal speed value of the motor; and
estimating, based on the reference power value, an amount of energy saved by the variable speed drive compared to direct on line motor control.

FIG. 1

FIG. 2

| 301 | Collect operational data associated with motor |
|-----|------------------------------------------------|
| 302 | Generate curve |
| 303 | Determine reference power value |
| 304 | Estimate amount of energy saved |
| 305 | Indicate amount of energy saved |

FIG. 3

| 401 | Collect operational data associated with motor |
|-----|------------------------------------------------|
| 402 | Determine reference power value |
| 403 | Estimate amount of energy saved |

FIG. 4

FIG. 5A

FIG. 5B

FIG. 5C

FIG. 6

700

```
┌─────────────────────────────────────────────────────────────────┐
│                                                                   │
│  ┌──────────────────┐   ┌────────────┐   ┌─────────────────────┐  │
│  │                  │   │            │   │                     │  │
│  │                  │   │            │   │        720          │  │
│  │                  │   │            │   │       Memory        │  │
│  │       730        │   │    710     │   │                     │  │
│  │  Communication   │───│  Control   │───│  ┌───────────────┐  │  │
│  │    Interface     │   │  Circuitry │   │  │      722      │  │  │
│  │                  │   │            │   │  │  Instructions │  │  │
│  │                  │   │            │   │  └───────────────┘  │  │
│  │                  │   │            │   │                     │  │
│  └──────────────────┘   └────────────┘   └─────────────────────┘  │
│                                                                   │
└─────────────────────────────────────────────────────────────────┘
```

FIG. 7

Europäisches
Patentamt

European
Patent Office

Office européen
des brevets

## EUROPEAN SEARCH REPORT

**Application Number**

EP 24 16 1160

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LOZANOV YAVOR ET AL: "Study of the effectiveness of a variable frequency drive of an induction motor", 2019 11TH ELECTRICAL ENGINEERING FACULTY CONFERENCE (BULEF), IEEE, 11 September 2019 (2019-09-11), pages 1-6, XP033737878, DOI: 10.1109/BULEF48056.2019.9030775 [retrieved on 2020-03-09] | 1-3,6,7, 10-12,14 | INV. H02P23/14 |
| Y | * Introduction * | 5,8,9,15 | |
| A | * page 1, right hand column, last paragaph to page 2, Fig.1 * * page 4, section IV * * page 5, Table VII * * figures 2, 3, 9 * | 4,13 | |
| Y | ALBERTI LUIGI ET AL: "Design of Electric Motors and Power Drive Systems According to Efficiency Standards", IEEE TRANSACTIONS ON INDUSTRIAL ELECTRONICS, IEEE SERVICE CENTER, PISCATAWAY, NJ, USA, vol. 68, no. 10, 2 September 2020 (2020-09-02), pages 9287-9296, XP011863985, ISSN: 0278-0046, DOI: 10.1109/TIE.2020.3020028 [retrieved on 2021-06-30] * sections II and III * * figures 2, 9 * | 15 | |

TECHNICAL FIELDS
SEARCHED     (IPC)

H02P

-/--

The present search report has been drawn up for all claims

| Place of search | Date of completion of the search | Examiner |
|---|---|---|
| Munich | 1 August 2024 | Roider, Anton |

EPO FORM 1503 03.82 (P04C01)

Europäisches
Patentamt

European
Patent Office

Office européen
des brevets

## EUROPEAN SEARCH REPORT

Application Number

EP 24 16 1160

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MALINOWSKI JOHN ET AL: "Update on DOE extended product regulations - Pumps, fans & air compressors", 2016 PETROLEUM AND CHEMICAL INDUSTRY TECHNICAL CONFERENCE (PCIC), IEEE, 19 September 2016 (2016-09-19), pages 1-11, XP032978294, DOI: 10.1109/PCICON.2016.7589202 [retrieved on 2016-10-12] * abstract * * paragraph 4) on page 2 * * section II on page 5 * * Table IV on page 6 * ----- | 5 | |
| Y | WO 2023/178403 A1 (WEG DRIVES & CONTROLS AUTOMACAO LTDA [BR]) 28 September 2023 (2023-09-28) * paragraphs [0062] - [0068], [0135] * * figures 1, 2, 3, 4 * ----- | 8,9 | |
| A | US 2010/306001 A1 (DISCENZO FREDERICK M [US] ET AL) 2 December 2010 (2010-12-02) * paragraphs [0088] - [0090], [0093] * * figure 1 * ----- | 1,5,10, 15 | TECHNICAL FIELDS SEARCHED (IPC) |

The present search report has been drawn up for all claims

| Place of search | Date of completion of the search | Examiner |
|---|---|---|
| Munich | 1 August 2024 | Roider, Anton |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 16 1160

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2024

| Patent document cited in search report | Publication date | Patent family member(s) | Publication date |
|---|---|---|---|
| WO 2023178403 A1 | 28-09-2023 | NONE | |
| US 2010306001 A1 | 02-12-2010 | EP 1521152 A2 | 06-04-2005 |
| | | US 2004267395 A1 | 30-12-2004 |
| | | US 2010306001 A1 | 02-12-2010 |

EPO FORM P0459

For more details about this annex : see Official Journal of the European Patent Office, No. 12/82